(19) **Europäisches Patentamt** / **European Patent Office** / **Office européen des brevets**

(11) **EP 4 651 509 A1**

(12) **EUROPEAN PATENT APPLICATION**
published in accordance with Art. 153(4) EPC

(43) Date of publication:
**19.11.2025  Bulletin 2025/47**

(21) Application number: **23921475.2**

(22) Date of filing: **07.11.2023**

(51) International Patent Classification (IPC):
*H04N 23/951* (2023.01)        *H04N 23/71* (2023.01)
*H04N 23/81* (2023.01)        *H04N 5/06* (2006.01)

(52) Cooperative Patent Classification (CPC):
**H04N 5/06; H04N 23/71; H04N 23/81; H04N 23/951**

(86) International application number:
**PCT/KR2023/017764**

(87) International publication number:
**WO 2024/167102 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.02.2023  KR 20230015731**

(71) Applicant: **Samsung Electronics Co., Ltd.**
**Suwon-si, Gyeonggi-do 16677 (KR)**

(72) Inventors:
 • **DOAN, Thi Giang**
  **Suwon-si**
  **Gyeonggi-do, 16677 (KR)**

 • **DO, Ngoc Huy**
  **Suwon-si**
  **Gyeonggi-do, 16677 (KR)**
 • **DINH, Thi Huyen Mai**
  **Suwon-si**
  **Gyeonggi-do, 16677 (KR)**
 • **VU, Thi Ngoc Diep**
  **Suwon-si**
  **Gyeonggi-do, 16677 (KR)**
 • **DOAN, Thanh Nam**
  **Suwon-si**
  **Gyeonggi-do, 16677 (KR)**

(74) Representative: **Gulde & Partner**
**Patent- und Rechtsanwaltskanzlei mbB**
**Berliner Freiheit 2**
**10785 Berlin (DE)**

(54) **FLICKER-CORRECTED VIDEO GENERATION METHOD AND ELECTRONIC DEVICE**

(57)    Disclosed are an electronic device and a method, wherein the electronic device may obtain a first image captured at intervals of a first period by using a first camera, obtain a second image captured at intervals of a second period by using a second camera, select the first image based on a light intensity value of the first image being less than or equal to a first threshold and greater than or equal to a second threshold, select the second image captured before the first image is captured, based on the light intensity value being greater than the first threshold or less than the second threshold, and generate a video, based on the selected first image or second image.

FIG. 1

## Description

### Technical Field

The present disclosure relates to a method and device for generating flicker-corrected video. Specifically, a method and device for generating flicker-corrected video based on images captured using a plurality of cameras may be provided.

### Background Art

When capturing video in an environment with a fluorescent light using an alternating current (AC) power supply, periodic bright and dark stripes or overall brightness (or intensity) differences between frames may appear in the obtained video. This phenomenon is called flicker. Depending on a type of image sensor, a method of accumulating charges is different. A global shutter method matches the timing of charge accumulation on a plane-by-plane basis, while a rolling shutter method matches the timing of charge accumulation on a line-by-line basis.

Videos captured with image sensors using the global shutter method may exhibit flickering that appears when there is a difference in brightness between frames across the entire plane. Videos captured with image sensors using the rolling shutter method may exhibit flickering that appears when there is a difference in brightness between lines within a plane. A method of correcting flicker may be required to improve a user's subjective image quality.

### Disclosure of Invention

### Solution to Problem

According to an embodiment of the present disclosure, provided is an electronic device including a first camera, a second camera, a memory storing at least one instruction, and at least one processor. The at least one processor may be configured to execute the at least one instruction to obtain a first image captured at intervals of a first period by using the first camera. The at least one processor may be configured to execute the at least one instruction to obtain a second image captured at intervals of a second period by using the second camera. The at least one processor may be configured to execute the at least one instruction to select the first image, based on a light intensity value of the first image being less than or equal to a first threshold and greater than or equal to a second threshold. The at least one processor may be configured to execute the at least one instruction to select the second image captured before the first image is captured, based on the light intensity value being greater than the first threshold or less than the second threshold. The at least one processor may be configured to execute the at least one instruction to generate a video based on the selected first image or second image.

According to an embodiment of the present disclosure, a video generation method is provided. The video generation method may include obtaining a first image captured at intervals of a first period by using a first camera. The video generation method may include obtaining a second image captured at intervals of a second period by using a second camera. The video generation method may include selecting the first image, based on a light intensity value of the first image being less than or equal to a first threshold and greater than or equal to a second threshold. The video generation method may include selecting the second image captured before the first image is captured, based on the light intensity value being greater than the first threshold or less than the second threshold. The video generation method may include generating a video based on the selected first image or second image.

According to an embodiment of the present disclosure, one or more computer-readable recording media having stored thereon a program for performing the method may be provided.

### Brief Description of Drawings

FIG. 1 is a diagram illustrating flicker appearing in an image, according to an embodiment of the present disclosure.
FIG. 2A is a diagram illustrating an image obtained according to an image capture period of an electronic device, according to an embodiment of the present disclosure.
FIG. 2B is a diagram illustrating an image obtained according to an image capture period of an electronic device, according to an embodiment of the present disclosure.
FIG. 3 is a diagram illustrating a method, performed by an electronic device, of generating a flicker-corrected video, according to an embodiment of the present disclosure.
FIG. 4 is a flowchart of a method of generating flicker-corrected video, according to an embodiment of the present disclosure.

FIG. 5 is a flowchart of a method of detecting whether there is flicker, according to an embodiment of the present disclosure.

FIG. 6 is a diagram illustrating a method of detecting whether there is flicker, according to an embodiment of the present disclosure.

FIG. 7 is a flowchart of a method of synchronizing parameters of a plurality of cameras, according to an embodiment of the present disclosure.

FIG. 8 is a diagram illustrating a method of synchronizing parameters of a plurality of cameras, according to an embodiment of the present disclosure.

FIG. 9 is a flowchart of a method of determining camera settings, according to an embodiment of the present disclosure.

FIG. 10 is a diagram illustrating a method of determining camera settings according to light intensity, according to an embodiment of the present disclosure.

FIG. 11 is a flowchart of a method of determining an image capture time of a camera, according to an embodiment of the present disclosure.

FIG. 12A is a diagram illustrating a method of determining a time point at which a camera starts capturing, according to an embodiment of the present disclosure.

FIG. 12B is a diagram illustrating a method of determining a time point at which a camera starts capturing, according to an embodiment of the present disclosure.

FIG. 13 is a diagram illustrating a method of determining an image exhibiting flicker, according to an embodiment of the present disclosure.

FIG. 14 is a flowchart of a method, performed by an electronic device, of displaying a preview image, according to an embodiment of the present disclosure.

FIG. 15 is a diagram illustrating a method, performed by an electronic device, of displaying a preview image, according to an embodiment of the present disclosure.

FIG. 16 is a flowchart of a method of correcting an image when ambient light intensity changes, according to an embodiment of the present disclosure.

FIG. 17 is a diagram illustrating a method of correcting an image when ambient light intensity changes, according to an embodiment of the present disclosure.

FIG. 18 is a diagram illustrating a method, performed by an electronic device, of generating flicker-corrected video by using prediction, according to an embodiment of the present disclosure.

FIG. 19 is a diagram illustrating a method of capturing and saving flicker-corrected video by using an electronic device, according to an embodiment of the present disclosure.

FIG. 20 is a block diagram of an electronic device for generating flicker-corrected video, according to an embodiment of the present disclosure.

FIG. 21 is a flowchart of a method of generating a flicker-corrected video, according to an embodiment of the present disclosure.

**Mode for Invention**

Throughout the present disclosure, the expression "at least one of a, b or c" indicates only a, only b, only c, both a and b, both a and c, both b and c, all of a, b, and c, or variations thereof.

The terms used in the present disclosure may be general terms currently widely used in the art by taking into account functions described herein, but may vary according to an intention of skilled persons engaged in the art, precedent cases, advent of new technologies, etc. Furthermore, specific terms may be arbitrarily selected by the applicant, and in this case, the meaning of the selected terms will be described in detail in the relevant description. Thus, the terms used herein should be defined not by simple appellations thereof but based on the meaning of the terms together with the overall description of the present disclosure.

Singular expressions may include plural expressions unless the context clearly dictates otherwise. Terms used herein, including technical or scientific terms, are intended to have the same meaning as commonly understood by one of ordinary skill in the art described herein. Furthermore, although the terms including an ordinal number such as "first", "second", etc. may be used herein to describe various elements or components, these elements or components should not be limited by the terms. The terms are only used to distinguish one element or component from another element or component.

Throughout the specification, when a part "includes" or "comprises" an element, unless there is a particular description contrary thereto, it is understood that the part may further include other elements, not excluding the other elements. In addition, terms such as "unit", "module", etc., described herein refer to a unit for processing at least one function or operation and may be implemented as hardware or software, or a combination of hardware and software.

In the present disclosure, because various changes may be made and numerous embodiments may be provided, particular embodiments are illustrated in the drawings and will be described in detail in the detailed description. However, embodiments of the present disclosure are not intended to be limited to the particular embodiments, and it should be understood that all changes, equivalents, and substitutes that do not depart from the spirit and technical scope of numerous embodiments are encompassed in the present disclosure.

In describing an embodiment, when it is determined that detailed descriptions of related known technologies may unnecessarily obscure the essence of the present disclosure, detailed descriptions thereof will be omitted. Furthermore, numbers (e.g., a first, a second, etc.) used in the description of the specification are merely identification symbols for distinguishing one element from another.

In addition, throughout the specification, when a component is referred to as being "connected" or "coupled" to another component, it should be understood that the component may be directly connected or coupled to the other component, but may also be connected or coupled to the other component via another intervening component therebetween unless there is a particular description contrary thereto.

Furthermore, in the present specification, for an element expressed as a "unit", a "module", or the like, two or more elements may be combined into a single element, or a single element may be divided into two or more elements according to subdivided functions. Furthermore, each component described below may further perform, in addition to its main functions, some or all of the functions performed by another element, and some of the main functions of each element may also be performed entirely by another element.

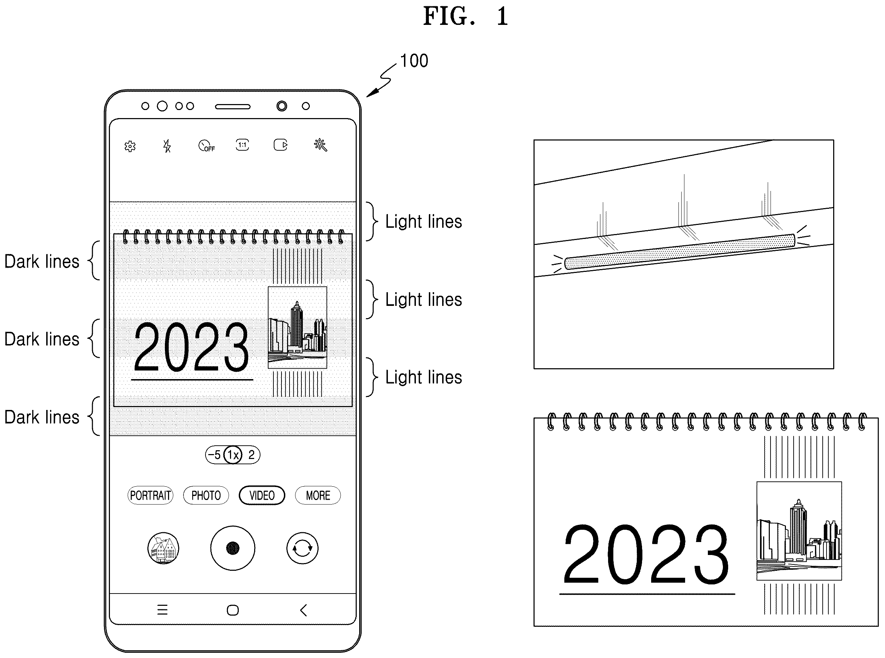

FIG. 1 is a diagram illustrating flicker appearing in an image, according to an embodiment of the present disclosure.

Referring to FIG. 1, an electronic device 100 may capture an image of an object under a fluorescent light using an alternating current (AC) power supply. **The** fluorescent light using the AC power supply has a flicker frequency determined based on a frequency of the power. For example, when an AC power frequency of 60 hertz (Hz) is used, the fluorescent light has a flicker frequency of 120 Hz (60 Hz*2). Similarly, when an AC power frequency of 50 Hz is used, the fluorescent light has a flicker frequency of 100 Hz (50 Hz*2).

The fluorescent light continuously fluctuates in brightness over time. Therefore, the light intensity of an image captured may vary depending on a time at which the electronic device 100 captures the image. Therefore, when the electronic device 100 captures the image of the object under the fluorescent light using the AC power supply, a flicker phenomenon may occur in the captured image. The flicker phenomenon occurring in the image may be based on a relationship between frames per second (or FPS) of the electronic device 100 and the flicker frequency of the fluorescent light. For example, when the FPS of the electronic device 100 does not satisfy the following conditions, flicker may occur in an image captured by the electronic device 100.

[Equation 1]

$$fps = f_{light}/N \text{ (where } f_{light} \text{ is a frequency of a light source and N is an integer)}$$

According to an embodiment, the frequency of the light source may be twice a power frequency of a power supply.

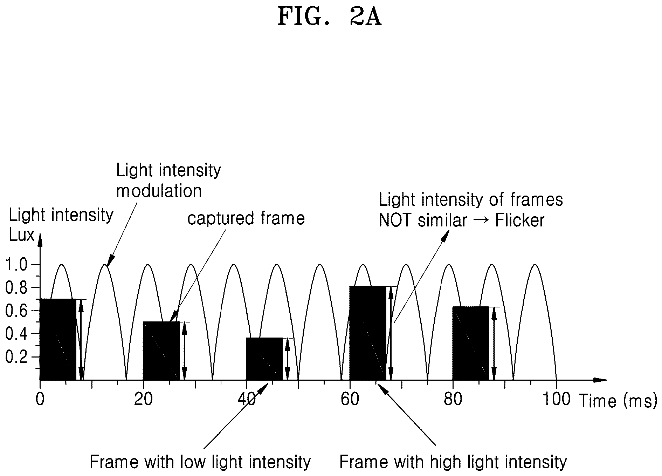

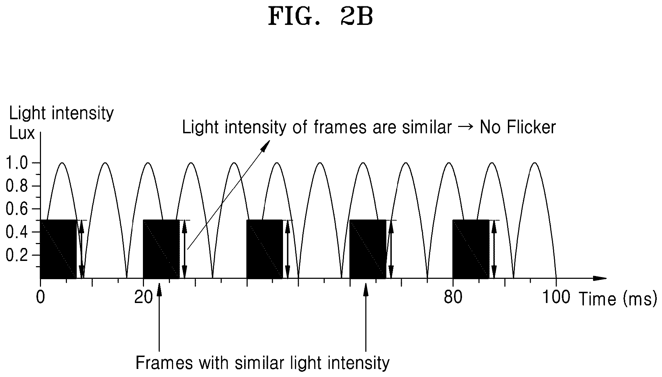

A case where a flicker phenomenon occurs in an image captured by the electronic device 100 is described in more detail with reference to FIGS. 2A and 2B.

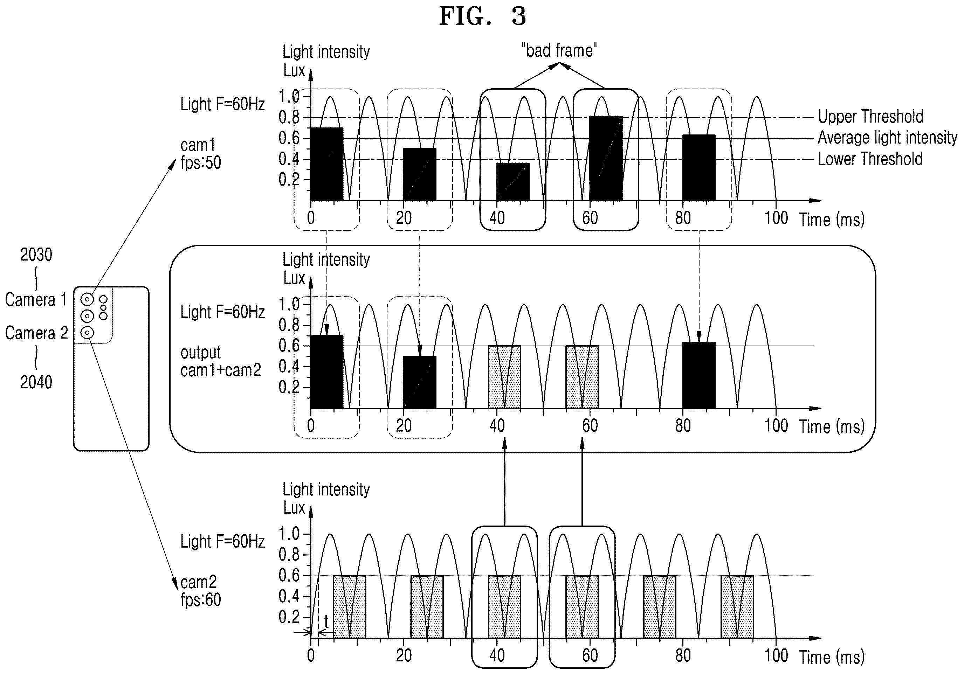

According to an embodiment of the present disclosure, the electronic device 100 may generate a flicker-corrected video by using images captured by a plurality of cameras. When the light intensity of an image captured by a first camera falls outside a certain range, the electronic device 100 may generate a video by replacing the image with images captured by a second camera. A method, performed by the electronic device 100, of generating a flicker-corrected video, according to an embodiment of the present disclosure, is described in more detail with reference to FIGS. 3 to 19.

FIG. 2A is a diagram illustrating an image obtained according to an image capture period of an electronic device, according to an embodiment of the present disclosure.

Referring to FIG. 2A, a graph shows light intensity of an image being captured with respect to time, when the electronic device 100 performs image capturing at a frame rate of 50 fps at 50 Hz in an environment with a light source using an AC power supply frequency of 60 Hz.

Because brightness of the light source varies when the electronic device 100 according to an embodiment performs image capture, images (which may be referred to as frames according to an example of the present disclosure) having different light intensities may be obtained. For example, light intensity of an image 210 captured by the electronic device 100 at 40 ms may be 0.4 lux, and light intensity of an image captured at 60 ms may be 0.8 lux. When images with different light intensities are displayed consecutively, the video may include flicker that is a phenomenon where an image repeatedly becomes lighter and darker.

FIG. 2B is a diagram illustrating an image obtained according to an image capture period of an electronic device, according to an embodiment of the present disclosure.

Referring to FIG. 2B, a graph shows light intensity of an image being captured with respect to time, when the electronic device 100 performs image capturing at a frame rate of 50 Hz or fps in an environment with a light source using an AC power supply frequency of 50 Hz.

Because brightness of the light source remains the same when the electronic device 100 according to an embodiment of the present disclosure captures images, images having the same light intensity may be obtained. For example, light intensity of an image captured by the electronic device 100 at 40 ms may be 0.5 lux, and light intensity of an image captured at 60 ms may be 0.5 lux. Because images with the same light intensity are displayed consecutively, the video does not exhibit flicker in which an image repeatedly becomes lighter and darker. When the electronic device 100 captures a video using an FPS that satisfies Equation 1, images with the same light intensity may be obtained each time.

FIG. 3 is a diagram illustrating a method, performed by an electronic device, of generating a flicker-corrected video, according to an embodiment of the present disclosure.

Referring to FIG. 3, according to an embodiment of the present disclosure, the electronic device 100 may obtain images by using a first camera 2030 and a second camera 2040 in an environment where the frequency of an AC power supply is 60 Hz.

The electronic device 100 may capture images at intervals of a first period (e.g., every 1/50 second, i.e., 50 fps) by using the first camera 2030, and at intervals of a second period (e.g., every 1/60 second, i.e., 60 fps) by using the second camera 2040. The first period may vary depending on a function performed by the electronic device 100. For example, the electronic device 100 may perform an image capture function such as normal capture, slow motion capture, or super slow motion capture. Accordingly, the first period may vary depending on the function of the electronic device 100.

When the first period does not satisfy Equation 1, first images captured using the first camera 2030 do not all have the same light intensity. The first images obtained by the electronic device 100 performing image capturing at 50 fps by using the first camera 2030 in an environment where the frequency of the AC power supply is 60 Hz may not all have the same light intensity. In repeatedly captured images, a flicker phenomenon may occur when there is a large difference in light intensity between consecutively captured images.

When the second period satisfies Equation 1, second images captured using the second camera 2030 may all have the same light intensity. For example, the second images obtained by the electronic device 100 performing image capturing at 60 fps using the second camera 2040 in an environment where the frequency of the AC power supply is 60 Hz may all have the same light intensity. The electronic device 100 may determine a time at which the second camera 2040 starts capturing a second image so that the light intensity of the second images satisfies a defined condition. For example, the electronic device 100 may determine the image capture start time of the second camera 2040 to be slower than an image capture start time of the first camera by t ms.

According to an embodiment of the present disclosure, the electronic device 100 may identify a light intensity of a first image captured using the first camera 2030. The electronic device 100 may determine whether the light intensity of the first image satisfies the defined condition. For example, the electronic device 100 may determine whether the light intensity of the first image is less than or equal to a first threshold (e.g., an upper threshold) and greater than or equal to a second threshold (e.g., a lower threshold).

Based on a light intensity of a first image captured at 40 ms being less than the second threshold, the electronic device 100 may determine that the first image does not satisfy the condition. The electronic device 100 may generate a video by using a second image captured using the second camera 2040 instead of the first image that does not satisfy the condition.

By using a first image and a second image, the electronic device 100 may generate a video with a light intensity that falls within a defined range. The electronic device 100 may generate a flicker-corrected video by using the first image and the second image even when capturing images at a frame rate (in fps) that does not satisfy Equation 1.

According to an embodiment, a video generated by the electronic device 100 may include a first image with a light intensity satisfying the defined condition and a second image that is captured before a first image with a light intensity not satisfying the defined condition. According to an embodiment, the electronic device 100 may generate the video to include the second image at an actual capture time (e.g., 38 ms) of the second image, but is not limited thereto and may generate the video to include the second image at a capture time (e.g., 40 ms) of the first image.

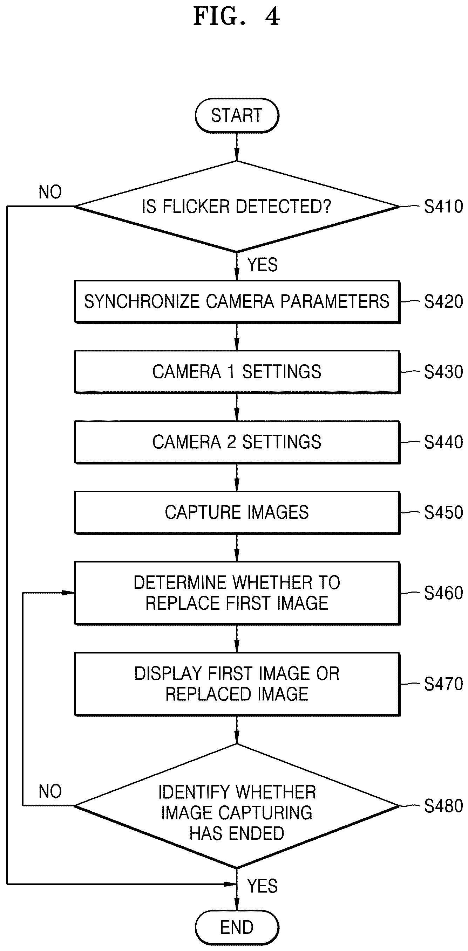

FIG. 4 is a flowchart of a method of generating a flicker-corrected video, according to an embodiment of the present disclosure.

The method of generating a flicker-corrected video according to the embodiment may be performed by the electronic device 100.

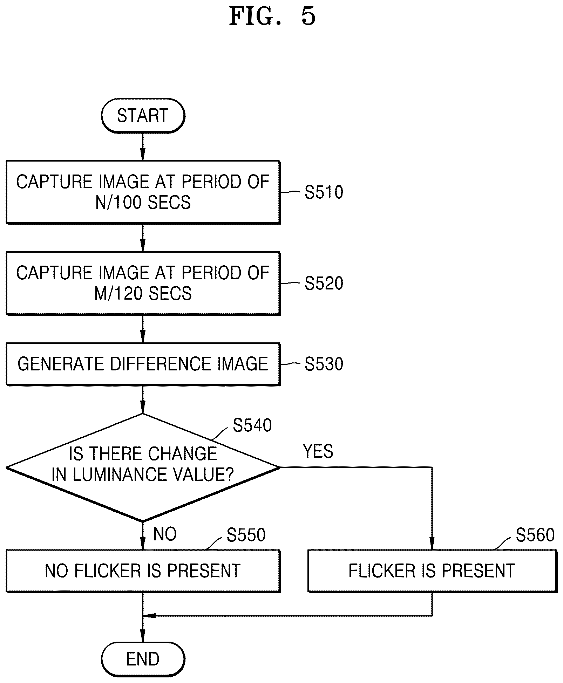

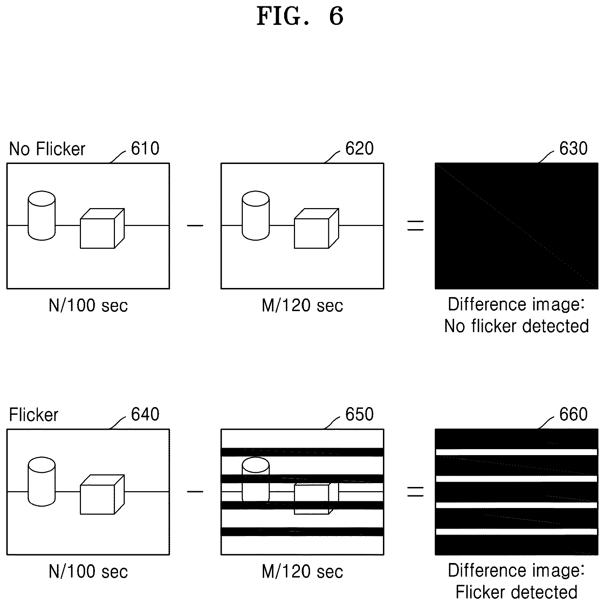

In operation S410, the electronic device 100 may identify whether flicker exists. A method by which the electronic device 100 identifies flicker, according to an embodiment, is described in more detail with reference to FIGS. 5 and 6. When the flicker is detected, the electronic device 100 performs operation S420, and when the flicker is not detected, end the process.

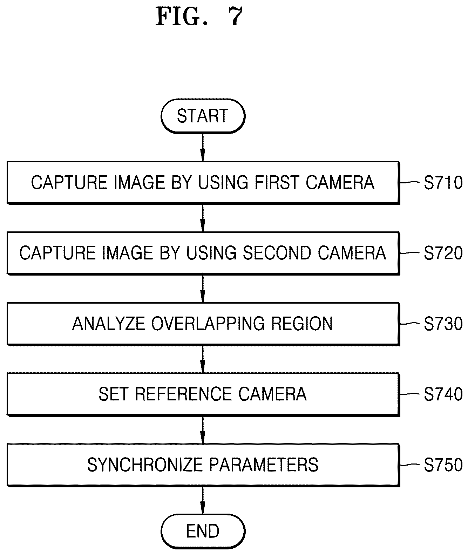

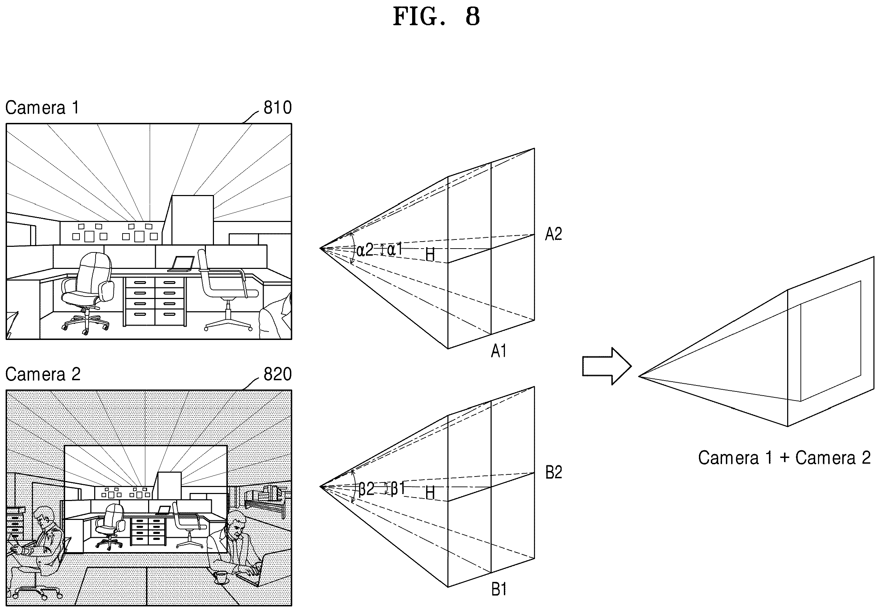

In operation S420, the electronic device 100 may synchronize camera parameters. The electronic device 100 may synchronize parameters of the first camera 2030 with parameters of the second camera 2040. In an embodiment, the electronic device 100 may determine a reference camera by analyzing images captured from the first camera 2030 and the second camera 2040, and synchronize parameters of the other camera to be identical to parameters of the reference camera. A process by which the electronic device 100 synchronizes camera parameters, according to an embodiment, is described in more detail with reference to FIGS. 7 and 8.

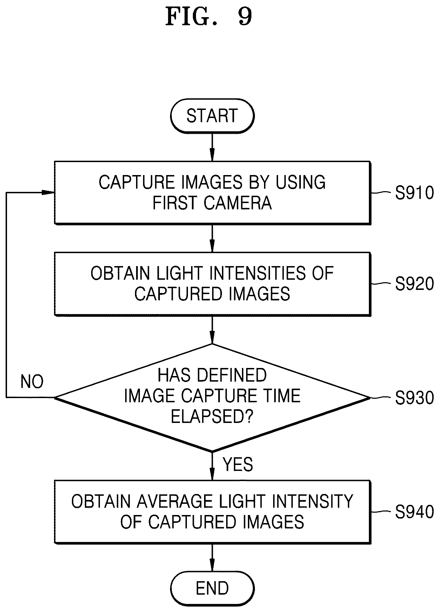

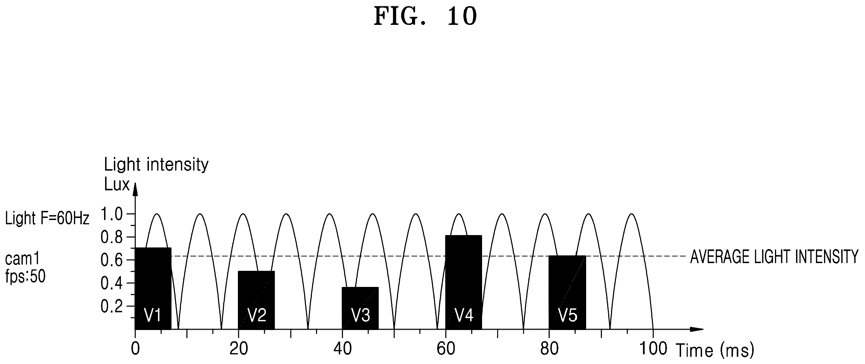

In operation S430, the electronic device 100 may determine settings of the first camera 2030. The electronic device 100 may determine a defined condition based on a first image captured by the first camera 2030. In an embodiment, the electronic device 100 may identify an average value of light intensities (or an average light intensity) of the first image, and determine an upper light intensity threshold (or a first threshold) and a lower light intensity threshold (or a second threshold) based on the average light intensity. A method by which the electronic device 100 determines the settings of the first camera 2030, according to an embodiment, is described in more detail with reference to FIGS. 9 and 10.

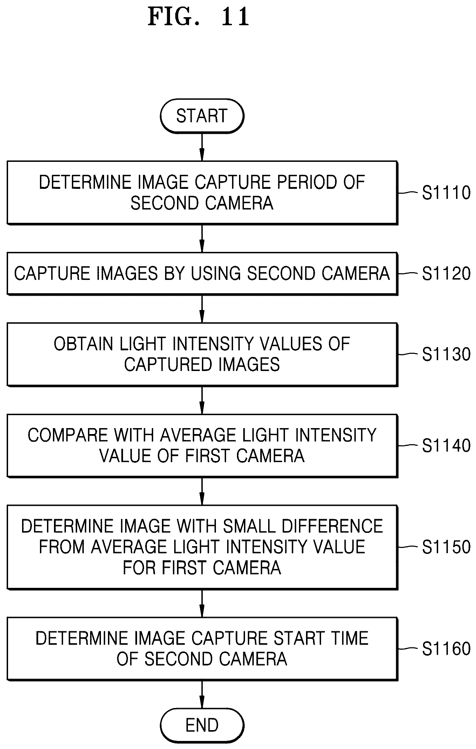

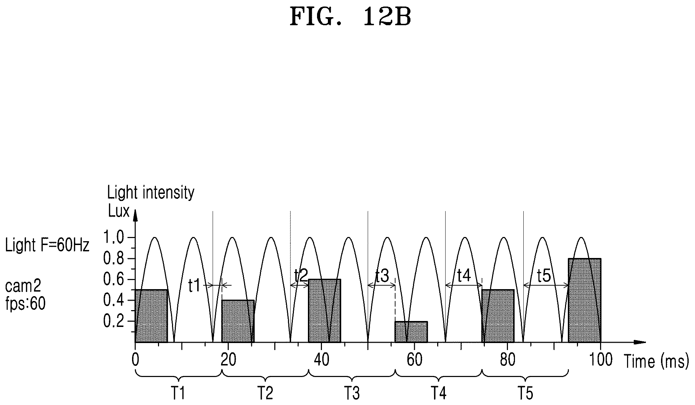

In operation S440, the electronic device 100 may determine settings of the second camera 2040. In an embodiment, the electronic device 100 may determine an image capture period and an image capture start time of the second camera 2040. The image capture start time may refer to a time interval between when the first camera 2030 starts image capturing and when the second camera 2040 starts image capturing. A method by which the electronic device 100 determines the settings of the second camera 2040, according to an embodiment, is described in more detail with reference to FIGS. 11 and 12B.

In operation S450, the electronic device 100 may capture images by using the first camera 2030 and the second camera 2040.

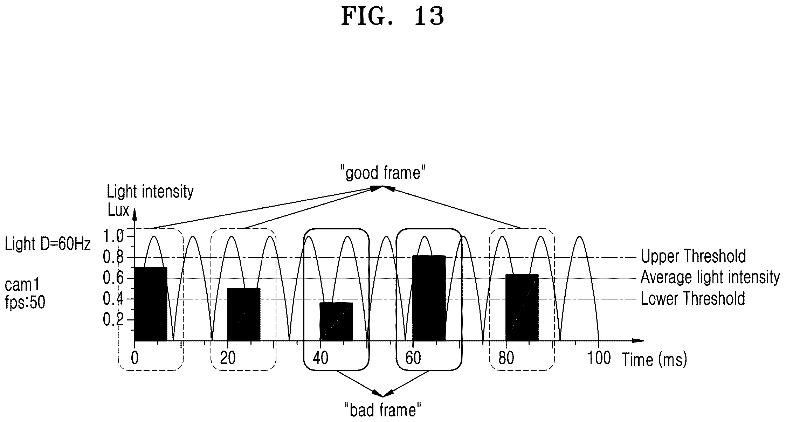

In operation S460, the electronic device 100 may determine whether to replace a first image. When a light intensity of the first image does not satisfy a defined condition, the electronic device 100 may determine to replace the first image. The electronic device 100 may generate a video by using a second image in place of the first image that does not satisfy the defined condition. A method by which the electronic device 100 determines whether to replace a first image is described in more detail with reference to FIG. 13.

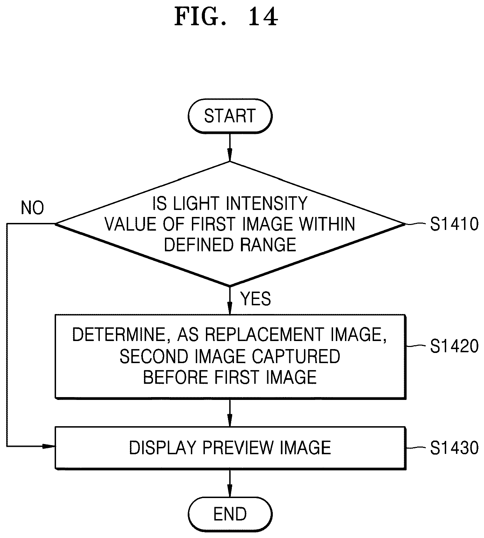

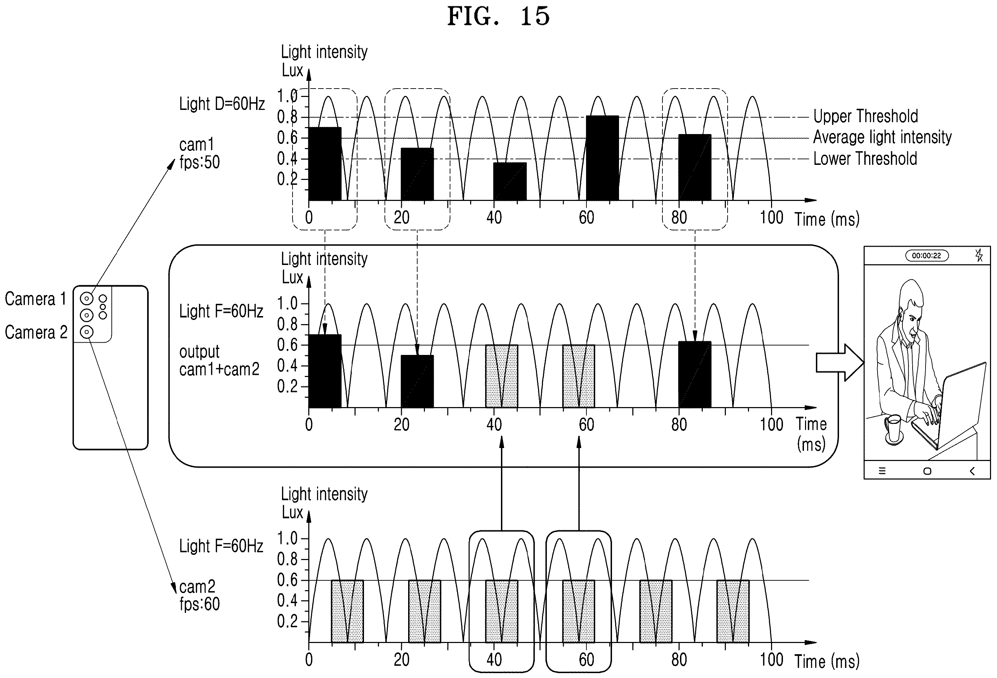

In operation S470, the electronic device 100 may display the first image or a replacement image. The electronic device 100 may display the first image that satisfies the defined condition, or display a second image in place of a first image that does not satisfy the defined condition. According to an embodiment, the electronic device 100 may display a video with a small difference in light intensity between consecutive images. A method by which the electronic device 100 displays a preview image, according to an embodiment, is described in more detail with reference to FIGS. 14 and 15.

In operation S480, the electronic device 100 may identify whether the image capturing has ended. When the image capturing has not ended, the electronic device 100 performs operation S460. The electronic device 100 repeats operations S460 to S480 for a first image newly captured after the first period.

FIG. 5 is a flowchart of a method of detecting whether there is flicker, according to an embodiment of the present disclosure. FIG. 6 is a diagram illustrating a method of detecting whether there is flicker, according to an embodiment of the present disclosure. A method by which the electronic device 100 detects whether there is flicker, according to an embodiment of the present disclosure, is described with reference to FIGS. 5 and 6.

The method of detecting whether there is flicker, according to an embodiment, may be performed by the electronic device 100.

In operation S510, the electronic device 100 may capture an image at a period of N/100 seconds (N is an integer). In an embodiment, the electronic device 100 may capture the image at the period of N/100 seconds by using one of a plurality of cameras. Referring to FIG. 6, the electronic device 100 may obtain N/100-second period images 610 and 640.

In operation S520, the electronic device 100 may capture an image at a period of M/120 seconds (M is an integer). In an embodiment, the electronic device 100 may capture the image by using a camera different from the camera used in operation S510. Referring to FIG. 6, the electronic device 100 may obtain M/120-second period images 620 and 650.

In operation S530, the electronic device 100 may generate a difference image. The electronic device 100 may generate a difference image representing a difference between the image captured at the period of N/100 seconds and the image captured at the period of M/120 seconds. In an embodiment, the electronic device 100 may obtain the difference image for a common region when a field of view of the image captured at the period of N/100 seconds is different from that of the image captured at the period of M/120 seconds. Referring to FIG. 6, the electronic device 100 may obtain difference images 630 and 660 respectively representing a difference between the N/100-second period image 610 and the M/120-second period image and a difference between the N/100-second period image 640 and the M/120-second period image.

In operation S540, the electronic device 100 may identify whether there is a change in luminance value based on the difference image.

Referring to FIG. 6, when there is no flicker, the captured N/100-second period image 610 and the M/120-second period image 620 have the same light intensity (e.g., luminance value), and most values of the difference image 630 may appear as 0.

When there is flicker, the captured N/100-second period image 640 and the M/120-second period image 650 have the same light intensity, and the difference image 660 may include non-zero values. For example, the difference image 660 may include a row containing non-zero values. Alternatively, the difference image 660 may contain non-zero values throughout the image.

In operation 540, when determining that there is no change in the luminance value, the electronic device 100 performs operation S550, and when determining that there is a change in the luminance value, the electronic device 100 performs operation S550.

In operation S550, the electronic device 100 may determine that there is no flicker in the image.

In operation S560, the electronic device 100 may determine that there is flicker in the image.

In the present disclosure, a period at which an image is captured by the first camera 2030 in order to perform the method of detecting whether there is flicker may be referred to as a third period, but is not limited thereto. In the present disclosure, an image captured via the first camera 2030 in order to perform the method of detecting whether there is flicker may be referred to as a first temporary image, but is not limited thereto. In the present disclosure, a period at which an image is captured via the second camera 2040 in order to perform the method of detecting whether there is flicker may be referred to as a fourth period, but is not limited thereto. In the present disclosure, an image captured via the second camera 2040 in order to perform the method of detecting whether there is flicker may be referred to as a second temporary image, but is not limited thereto.

FIG. 7 is a flowchart of a method of synchronizing parameters of a plurality of cameras, according to an embodiment of the present disclosure. FIG. 8 is a diagram illustrating a method of synchronizing parameters of a plurality of cameras, according to an embodiment of the present disclosure. A method by which the electronic device 100 synchronizes camera parameters, according to an embodiment of the present disclosure, is described with reference to FIGS. 7 and 8.

The method of synchronizing camera parameters, according to an embodiment, may be performed by the electronic device 100.

In operation S710, the electronic device 100 may capture an image by using the first camera 2030. Referring to FIG. 8, the electronic device 100 may obtain an image 810 by using the first camera 2030. In the present disclosure, the image 810 captured by the electronic device 100 using the first camera 2030 to synchronize camera parameters may be referred to as a third temporary image.

In operation S720, the electronic device 100 may capture an image by using the second camera. Referring to FIG. 8, the electronic device 100 may obtain an image 820 by using the second camera 2040. In the present disclosure, the image 820 captured by the electronic device 100 using the second camera 2040 to synchronize camera parameters may be referred to as a fourth temporary image.

In operation S730, the electronic device 100 may analyze an overlapping region. When fields of view $\alpha 1$ and $\alpha 2$ of the first camera 2030 are respectively different from fields of view $\beta 1$ and $\beta 2$ of the second camera 2030, areas being captured by the electronic device 100 may be different. For example, the image 820 obtained from the second camera 2040 may be an image that includes a wider area than the image 810 obtained from the first camera 2030. The electronic device 100 may determine a region commonly included in the image 810 obtained from the first camera 2030 and the image 820 obtained from the second camera 2040.

In operation S740, the electronic device 100 may select a reference camera. The electronic device 100 may select the reference camera by analyzing images for the overlapping region between the images 810 and 820. For example, the electronic device 100 may select a camera that captured an image with evenly distributed exposure as a reference camera through histogram analysis of the images 810 and 820.

In operation S750, the electronic device 100 may synchronize parameters. The electronic device 100 may synchronize parameters of the other camera to be identical to parameters of the reference camera. For example, when the first camera is selected as the reference camera, the electronic device 100 may adjust parameters of the second camera to correspond to parameters of the first camera. The camera parameters may include settings for ISO value, resolution, or aperture.

Although FIG. 8 illustrates an example in which the second camera has a wider field of view than the first camera, the present disclosure is not limited thereto, and the first camera may has a wider field of view than the second camera. In such an example, the first image 810 may be captured to include the second image 820.

FIG. 9 is a flowchart of a method of determining camera settings, according to an embodiment of the present disclosure. FIG. 10 is a diagram illustrating a method of determining camera settings according to light intensity according to an embodiment of the present disclosure. A method by which the electronic device 100 determines camera settings, according to an embodiment of the present disclosure, is described with reference to FIGS. 9 and 10.

The method of determining camera settings, according to an embodiment of the present disclosure, may be performed by the electronic device 100.

In operation S910, the electronic device 100 may capture images by using the first camera 2030.

In operation S920, the electronic device 100 may obtain light intensity values of the captured images. Referring to FIG. 10, for example, a light intensity value of an image captured at 0 ms may be V1, and a light intensity value of an image captured at 20 ms may be V2.

In operation S930, the electronic device 100 may identify whether a defined image capture time has elapsed. The electronic device 100 may repeatedly capture images until the defined image capture time has elapsed. Alternatively, the electronic device 100 may repeatedly capture images until the number of captured images reaches a defined value. For example, the electronic device 100 may repeatedly capture images to obtain n images (n = fps/10, where fps is the number of frames per second). Referring to FIG. 10, the electronic device 100 may capture 5 images by using the first camera 2030.

In operation S940, the electronic device 100 may obtain an average light intensity value of the captured images. Referring to FIG. 10, an average light intensity value 'A' may be determined as an arithmetic mean of the light intensities of the obtained images. For example, the average light intensity value A = (V1 + V2 + V3 + V4 + V5) / 5, so referring to FIG. 10, the average light intensity value A may be 0.6 Lux (A = (0.7 + 0.5 + 0.4 + 0.8 + 0.6) / 5).

According to an embodiment of the present disclosure, the electronic device 100 may determine an image capture time of the second camera 2040 based on the determined average light intensity value of the images. The electronic device 100 may determine a first threshold (an upper threshold) or a second threshold (a lower threshold) based on the determined average light intensity value of the images.

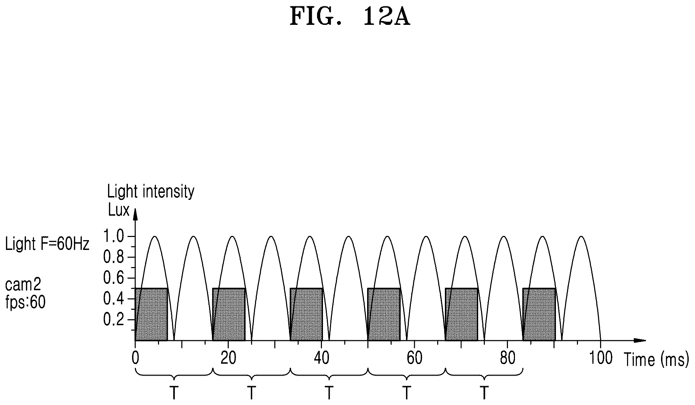

FIG. 11 is a flowchart of a method of determining an image capture time of a camera, according to an embodiment of the present disclosure. FIG. 12A is a diagram illustrating a method of determining an image capture time of a camera, according to an embodiment of the present disclosure. FIG. 12B is a diagram illustrating a method of determining an image capture time of a camera, according to an embodiment of the present disclosure. A method by which the electronic device 100 determines an image capture time of a camera, according to an embodiment of the present disclosure, is described with reference to FIGS. 11 to 12B.

The method of determining camera settings, according to an embodiment of the present disclosure, may be performed by the electronic device 100.

In operation S1110, the electronic device 100 may determine an image capture period of the second camera 2040. The image capture period determined by the electronic device 100 in operation S1110 may refer to an image capture period used in an operation for determining settings of the second camera 2040, and the image capture period for generating a video after completing the settings is not limited to the image capture period determined in operation S1110.

According to an embodiment, the electronic device 100 may determine a power frequency (or a utility frequency) based on a geographic location thereof. For example, most regions of the world use a power frequency of 50 Hz, while the United States and some parts of Asia use a power frequency of 60 Hz. The electronic device 100 may identify frames per second (or fps) satisfying Equation 1 based on the power frequency determined based on the location of the electronic device 100. For example, the electronic device 100 may determine 120/N Hz (where N is an integer) as frames per second satisfying Equation 1 in a location using a power frequency of 60 Hz, or may identify N/120 seconds.

Referring to FIG. 12A, when the electronic device 100 captures an image (which may be referred to as a fifth temporary image in the present disclosure) at a period T (e.g., N/120 seconds) satisfying Equation 1, images having the same light intensity may be obtained. Referring to FIG. 12B, the electronic device 100 may determine an image capture period based on the period T satisfying Equation 1. For example, a difference in an image capture time between a 0-th image (an image obtained at 0 seconds is referred to as the 0-th image for convenience of description of the formulae described below) and a first image may be determined as $T_1 = T + k$ (where k is a defined constant, e.g., k = 2). Similarly, differences in image capture time between consecutive images may be determined as $T_2 = T + k$, $T_3 = T + k$, $T_4 = T + k$, and $T_5 = T + k$. In the example, a capture time of an i-th captured image may be determined as $T * i + k * i$. In other words, there is a difference of $t_i = k * i$ between a capture time of the i-th image captured with the image capture period T + k and a capture time of an i-th image captured with the image capture period T. Referring to FIG. 12B, when the electronic device 100 performs image capturing by using a period $T_i$ determined based on the period T, the electronic device 100 may obtain images with different light intensities.

In operation S1120, the electronic device 100 may capture images by using the second camera 2040. The electronic device 100 may repeat image capturing a defined number of times. For example, the electronic device 100 may repeatedly obtain an image n times (n = fps / 10, where fps is the number of frames captured by the camera per second) by using the second camera 2040. The electronic device 100 may obtain a plurality of images with different light intensities by using the image capture period determined in operation S1110.

In operation S1130, the electronic device 100 may obtain light intensity values of the captured images.

In operation S1140, the electronic device 100 may compare the light intensity values with an average light intensity value of the first camera 2030. The electronic device 100 may compare the light intensity values captured by the electronic device 100 in operation S1130 with the average light intensity value that serves as a basis for a defined condition of the electronic device 100. For example, the average light intensity value may be the average light intensity value obtained in operation S940.

In operation S1150, the electronic device 100 may determine an image having a light intensity value with a small difference from the average light intensity value of the first camera 2030. The electronic device 100 may identify one image having a light intensity value with a smallest difference from the average light intensity value.

In operation S1160, the electronic device 100 may determine an image capture start time of the second camera 2040. For example, when it is determined that a light intensity value of a second captured image has a smallest difference from the average light intensity value, the electronic device 100 may determine the image capture start time of the second

camera 2040 as $t_2$. The image capture start time of the second camera 2040 may refer to a time between when the first camera 2030 starts image capturing and when the second camera 2040 starts image capturing. In an embodiment, when the electronic device 100 performs image capturing by setting the image capture start time to the time (e.g., $t_2$) determined in operation S1160 and an image capture period to the period T (e.g., N/120 seconds) satisfying Equation 1, the electronic device 100 may repeatedly capture images with light intensity values having a small difference from the average light intensity value.

FIG. 13 is a diagram illustrating a method of determining an image exhibiting flicker, according to an embodiment of the present disclosure.

Referring to FIG. 13, the electronic device 100 may obtain images by performing image capturing at intervals of a first period using the first camera 2030. According to an embodiment of the present disclosure, the electronic device 100 may determine a defined condition. The electronic device 100 may determine an upper threshold (a first threshold) and a lower threshold based on an average light intensity value. For example, when the average light intensity value of the images obtained using the first camera 2030 is 0.6 lux, the electronic device 100 may determine the upper threshold as 0.8 lux and the lower threshold as 0.4 lux. The electronic device 100 may determine the upper threshold and the lower threshold so that they differ from the average light intensity value by a certain constant (e.g., 0.2 lux), or may determine the upper threshold and the lower threshold so that they differ from the average light intensity value by a certain percentage (e.g., 10 %).

Referring to FIG. 13, for example, light intensities of the images captured at 0 ms, 20 ms, 40 ms, 60 ms, and 80 ms may be 0.7 lux, 0.5 lux, 0.35 lux, 0.81 lux, and 0.65 lux, respectively. When the upper threshold of the condition is 0.8 lux and the lower threshold is 0.4 lux, the electronic device 100 may determine the images captured at 0 ms, 20 ms, and 80 ms as images that satisfy the defined condition (which may be referred to as "good frames" according to an example), and the images captured at 40 ms and 60 ms as images that do not satisfy the defined condition(which may be referred to as 'bad frames' according to an example).

The electronic device 100 may generate a video which includes an image that satisfies the defined condition and an image captured using the second camera 2040 instead of an image that does not satisfy the defined condition.

FIG. 14 is a flowchart of a method, performed by an electronic device, of displaying a preview image, according to an embodiment of the present disclosure. FIG. 15 is a diagram illustrating a method, performed by an electronic device, of displaying a preview image, according to an embodiment of the present disclosure. A method by which the electronic device 100 displays a camera preview image, according to an embodiment of the present disclosure, is described with reference to FIGS. 14 and 15.

The method of displaying a preview image, according to an embodiment, may be performed by the electronic device 100.

In operation S1410, the electronic device 100 may identify whether a light intensity value of a first image falls within a defined range. Referring to FIG. 15, the electronic device 100 may identify whether a light intensity of an image captured using the first camera 2030 falls within a defined range.

In operation S1420, the electronic device 100 may determine, as a replacement image, a second image captured before the first image. The electronic device 100 may periodically obtain images by using the first camera 2030 and the second camera 2040. In place of a first image that does not satisfy the defined condition, the electronic device 100 may determine, as a replacement image, an image captured using the second camera 2040 before a capture time of the first image . Referring to FIG. 15, for example, the electronic device 100 may determine that a light intensity of an image captured using the first camera 2030 at 40 ms does not satisfy the defined condition. The electronic device 100 may determine, as a replacement image, an image captured at 38 ms, which is the most recent image captured before 40 ms by using the second camera 2040.

In operation S1430, the electronic device 100 may display a preview image. While capturing images, the electronic device 100 may display a preview image showing an image currently being captured. According to one embodiment of the present disclosure, the electronic device 100 may display, as the preview image, a first image satisfying the defined condition and the second image determined as the replacement image. The electronic device 100 may display images captured using the first camera 2030 at 0 ms and 20 ms, images captured using the second camera 2040 at 38 ms and 54 ms, and an image captured using the first camera 2030 at 80 ms.

According to an embodiment of the present disclosure, the electronic device 100 displays a preview image at a time (e.g., 38 ms) when the second camera 2040 captures the image, but is not limited thereto and may display a preview image at a time (e.g., 40 ms) when the first camera 2040 captures the image. The electronic device 100 may display a flicker-corrected image by displaying images that fall within the defined range as a preview image.

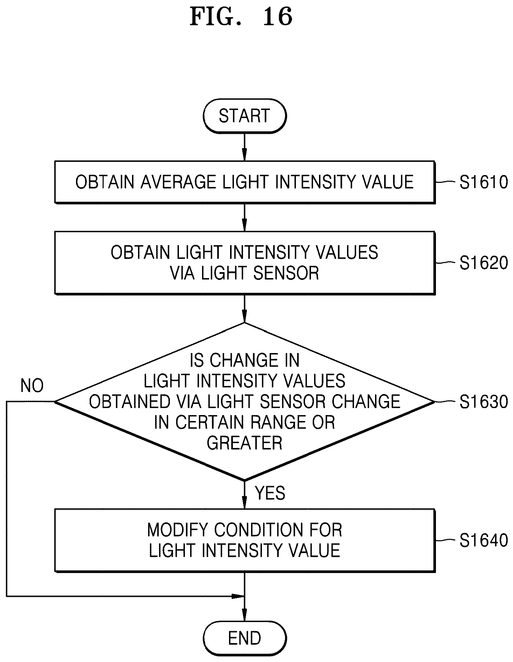

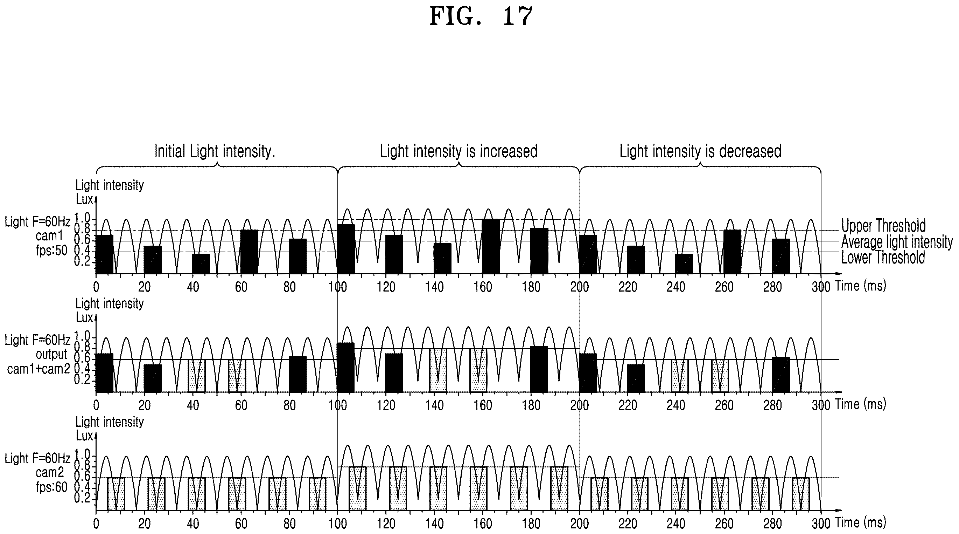

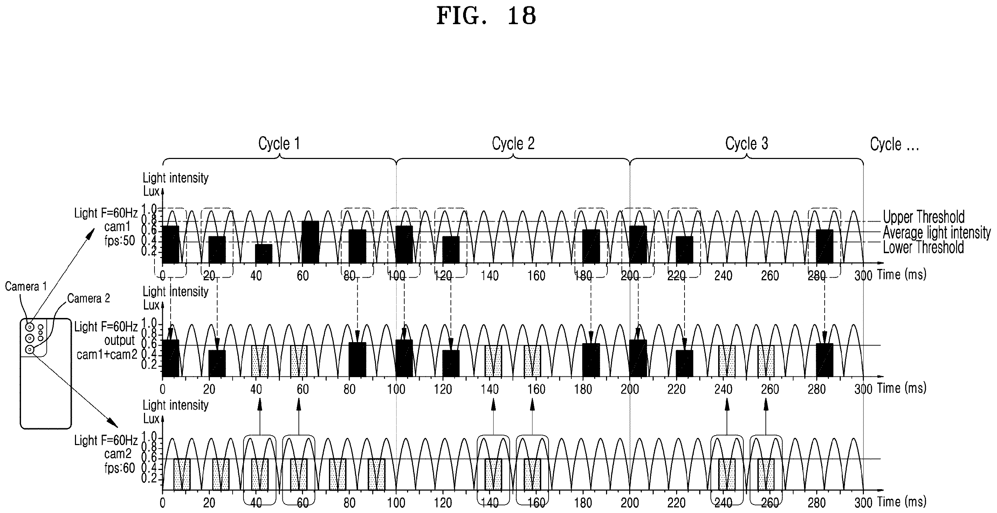

FIG. 16 is a flowchart of a method of correcting an image when ambient light intensity changes, according to an embodiment of the present disclosure. FIG. 17 is a diagram illustrating a method of correcting an image when ambient light intensity changes, according to an embodiment of the present disclosure. A method by which the electronic device 100 corrects an image when ambient light intensity changes, according to an embodiment of the present disclosure, is described with reference to FIGS. 17 and 18.

The method of correcting an image when ambient light intensity changes, according to an embodiment of the present disclosure, may be performed by the electronic device 100. In operation S1610, the electronic device 100 may obtain an average light intensity value of some images captured using the first camera 2030. According to an embodiment of the present disclosure, operation S1610 may correspond to operation S940. Referring to FIG. 17, for example, an average of initial light intensity values may be 0.6 lux, and a defined condition may be an upper threshold of 0.8 lux and a lower threshold of 0.4 lux.

In operation S1620, the electronic device 100 may obtain light intensity values via a light sensor. The electronic device 100 may repeatedly obtain light intensity of the surrounding environment by using the light sensor.

In operation S1630, the electronic device 100 may identify a change in the light intensity values obtained via the light sensor. The electronic device 100 may identify light intensity values that are repeatedly obtained, and check whether the identified light intensity values change by a certain range or greater. The electronic device 100 may determine the degree of brightness by comparing to a time at which the previous average light intensity value was determined. Referring to FIG. 17, the electronic device 100 may identify that an ambient light intensity value has increased by a certain range or greater at 100 ms (e.g., increased by 0.1 lux from an ambient light intensity value at 0 ms, and that an ambient light intensity value has decreased by a certain range or greater at 200 ms (e.g., decreased by 0.1 lux from the ambient light intensity value at 100 ms).

In operation S1640, the electronic device 100 may modify the average light intensity value. The electronic device 100 may update an average light intensity value A based on the change in the light intensities obtained by the light sensor. Referring to FIG. 17, based on identifying that the ambient light intensity has increased by 0.1 lux at 100 ms, the electronic device 100 may determine the average light intensity value A to be 0.7 lux by increasing it by 0.1 lux. Based on identifying that the ambient light intensity has decreased by 0.1 lux at 200 ms, the electronic device 100 may determine the average light intensity value A to be 0.6 lux by decreasing it by 0.1 lux.

The electronic device 100 may update the defined condition based on the average light intensity value. Referring to FIG. 17, based on the average light intensity being increased by 0.1 lux at 100 ms, the electronic device 100 may respectively determine the upper threshold and the lower threshold to be 0.9 lux and 0.5 lux. Based on the average light intensity value being decreased by 0.1 lux at 200 ms, the electronic device 100 may respectively determine the upper threshold and the lower threshold to be 0.8 lux and 0.4 lux.

FIG. 18 is a diagram illustrating a method, performed by an electronic device, of generating a flicker-corrected video by using prediction, according to an embodiment of the present disclosure.

Referring to FIG. 18, the electronic device 100 may periodically obtain images of the same light intensity according to frames per second of the first camera 2030 and a flicker period of a light source. When the first camera 2030 has a frame rate of 50 fps and a power supply has a frequency of 60 Hz, the electronic device 100 may obtain images of the same light intensity in five image capture periods (100 ms). For example, images respectively captured by the electronic device 100 at 0 ms, 100 ms, and 200 may have the same light intensity. According to an embodiment of the present disclosure, a period of time when the electronic device 100 repeatedly obtains images of the same light intensity may be referred to as a cyclic period (or a cycle).

According to an embodiment of the present disclosure, the electronic device 100 may generate a flicker-corrected video based on a first image and a second image captured via the first camera 2030 and the second camera 2040 during a first cycle. The electronic device 100 may identify an image capture time indicating a case where light intensity of a first image captured by the first camera 2030 during the first cycle does not satisfy a defined condition.

According to an embodiment of the present disclosure, the electronic device 100 may predict whether light intensity of an image obtained via the first camera 2030 satisfies a defined range. Based on a result of the prediction, the electronic device 100 may capture images by using one of the first camera 2030 and the second camera 2040 from a second repetition cycle. When light intensity of a first image does not satisfy the defined condition in the first cycle, the electronic device 100 may not perform image capturing by using the first camera 2040 and may perform image capturing by using the second camera. When the light intensity of the first image satisfies the defined condition in the first cycle, the electronic device 100 may perform image capturing by using the first camera 2030 and may not perform image capturing by using the second camera 2040. For example, the electronic device 100 may perform image capturing by using the first camera 2030 at 100 ms, 120 ms, and 180 ms of the second repetition cycle, and may not perform image capturing by using the first camera 2030 at 140 ms and 160 ms. Also, for example, the electronic device 100 may not perform image capturing by using the second camera 2040 at 100 ms, 120 ms, and 180 ms of the second repetition cycle, and may perform image capturing by using the second camera 2040 at 140 ms and 160 ms.

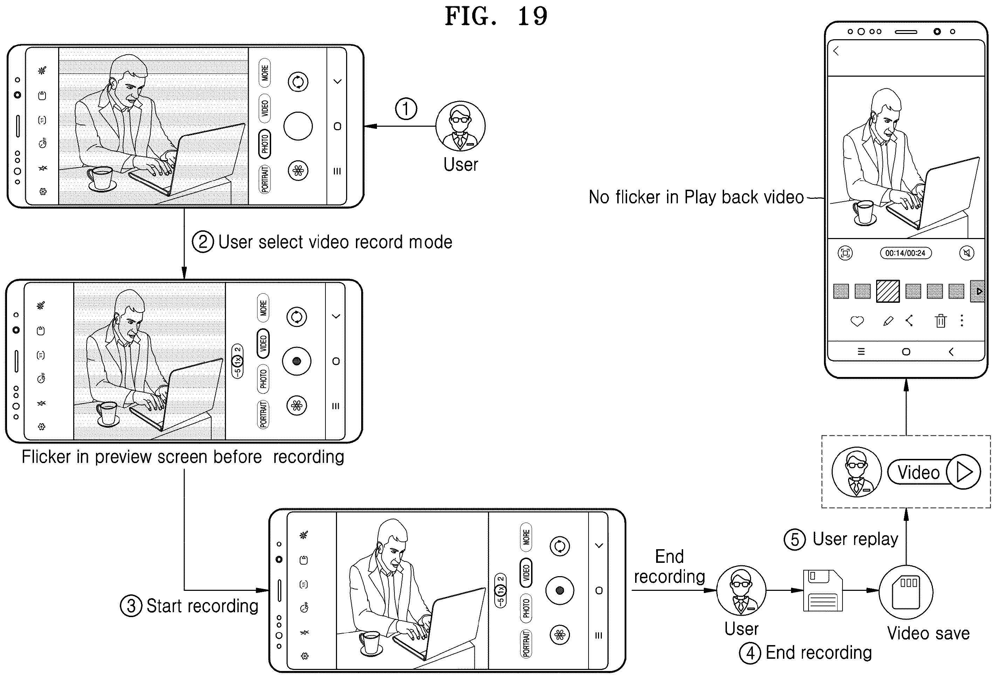

FIG. 19 is a diagram illustrating a method of capturing and storing a flicker-corrected video by using an electronic device, according to an embodiment of the present disclosure.

Referring to FIG. 19, a user may view and obtain a flicker-corrected video by using the electronic device 100 according to an embodiment of the present disclosure. The electronic device 100 may execute a camera application based on the user's input. The electronic device 100 may display a preview image. Depending on the frames per second of the electronic device 100, the preview image may exhibit flicker.

The electronic device 100 may change to a recording mode based on a user input. Similarly, the preview image may exhibit flicker depending on the frames per second of the electronic device 100.

The electronic device 100 may perform recording based on a user input. According to an embodiment of the present disclosure, the electronic device 100 may display a flicker-corrected preview image based on the method of generating a flicker-corrected image, as described with reference to FIGS. 3 to 15.

The electronic device 100 may end the recording and store a video based on a user input. The electronic device 100 may store a flicker-corrected video generated based on a first image and a second image obtained via the first camera 2030 and the second camera 2040.

The electronic device 100 may play back the stored video based on a user input. Because the stored video is a flicker-corrected video, the electronic device 100 may display the flicker-corrected video.

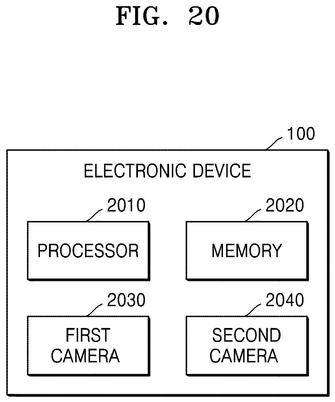

FIG. 20 is a block diagram of an electronic device for generating a flicker-corrected video, according to an embodiment of the present disclosure.

According to an embodiment of the present disclosure, the electronic device 100 may include, but is not limited to, a processor 2010, a memory 2020, a first camera 2030, and a second camera 2040, and may further include a general-purpose component.

According to an embodiment, the memory 2020 may store programs necessary for processing or control operations by the processor 2010, and store data input to or output from the electronic device 100. The memory 2020 may store instructions, data structures, and program code readable by the processor 2010. In the disclosed embodiments, operations performed by the processor 2010 may be implemented by executing instructions or code of a program stored in the memory 2020. The memory 2020 may store images captured by the first camera 2030 or the second camera 2040, or store a flicker-corrected video.

According to an embodiment, the memory 2020 may include a flash memory-type memory, a hard disk-type memory, a multimedia card micro-type memory, and a card-type memory (e.g., a Secure Digital (SD) or eXtreme Digital (XD) memory, etc.), and may include nonvolatile memory including at least one of read-only memory (ROM), electrically erasable programmable ROM (EEPROM), PROM, magnetic memory, magnetic disk, and optical disk, and volatile memory such as random access memory (RAM) or static RAM (SRAM).

According to an embodiment, the memory 2020 may store one or more instructions and/or programs that control the electronic device 100 for generating a video to perform a task.

According to an embodiment, the processor 2010 may execute instructions or programmed software modules stored in the memory 2020 to control operations or functions to enable the electronic device 100 to perform a task. The processor 2010 may be composed of hardware components that perform arithmetic, logic, and input/output (I/O) operations, and signal processing. The processor 2010 may execute programs stored in the memory 2020 to control the first camera 2030, the second camera 2040, an I/O interface, and a communication unit.

According to an embodiment, the processor 2010 may consist of, but is not limited to, at least one of a central processing unit (CPU), a microprocessor, a graphics processing unit (GPU), application-specific integrated circuits (ASICs), digital signal processors (DSPs), digital signal processing devices (DSPDs), programmable logic devices (PLDs), field programmable gate arrays (FPGAs), an application processor (AP), a neural processing unit (NPU), or a dedicated artificial intelligence (AI) processor designed with a hardware structure specialized for processing AI models. Each processor constituting the processor 2010 may be a dedicated processor for performing a defined function.

According to an embodiment, an AI processor may perform computation and control by using an AI model to process a task that the electronic device 100 is configured to perform. The AI processor may may be manufactured in the form of a dedicated hardware chip for AI, or may be manufactured as part of a general-purpose processor (e.g., a CPU or an AP) or a dedicated graphics processor (e.g., a GPU) and mounted on the electronic device 100.

The first camera 2030 and the second camera 2040 may obtain a video and/or images by capturing images of an object. The first camera 2030 and the second camera 2040 may include, for example, but are not limited to, a red, green, and blue (RGB) camera, a telephoto camera, a wide-angle camera, an ultra-wide-angle camera, etc. The first camera 2030 and the second camera 2040 may obtain a video including a plurality of frames. The first camera 2030 and the second camera 2040 may be configured as one or more modules. For example, the first camera 2030 and the second camera 2040 may be included in a single module or may be respectively included in a plurality of modules. Because specific types and detailed functions of the first camera 2030 and the second camera 2040 may be clearly inferred by one of ordinary skill in the art, a description thereof is omitted.

According to an embodiment of the present disclosure, the processor 2010 may execute an instruction stored in the memory 2020 to obtain a first image captured at intervals of a first period by using the first camera 2030. The processor 2010 may execute an instruction stored in the memory 2020 to obtain a second image captured at intervals of a second period by using the second camera 2040. The processor 2010 may execute an instruction stored in the memory 2020 to select the first image, based on a light intensity value of the first image being less than or equal to a first threshold and greater than or equal to a second threshold. The processor 2010 may execute an instruction stored in the memory 2020 to select the second image captured before the first image is captured, based on the light intensity value being greater than the first threshold or less than the second threshold. The processor 2010 may execute an instruction stored in the memory 2020 to generate a video based on the selected first image and second image.

According to an embodiment of the present disclosure, the processor 2010 may execute an instruction stored in the memory 2020 to obtain a third temporary image by using the first camera 2030. The processor 2010 may execute an instruction stored in the memory 2020 to obtain a fourth temporary image by using the second camera 2040. The processor 2010 may execute an instruction stored in the memory 2020 to determine a reference camera among the first camera and the second camera based on light intensity distributions of the third temporary image and the fourth temporary image. The processor 2010 may execute an instruction stored in the memory 2020 to synchronize settings of the first camera or the second camera 2040 based on settings of the reference camera.

According to an embodiment of the present disclosure, the processor 2010 may execute an instruction stored in the memory 2020 to identify an overlapping region between the third temporary image and the fourth temporary image. The processor 2010 may execute an instruction stored in the memory 2020 to determine a reference camera among the first camera 2030 and the second camera 2040 based on a light intensity distribution of the overlapping region between the third temporary image and the fourth temporary image.

According to an embodiment of the present disclosure, the processor 2010 may execute an instruction stored in the memory 2020 to obtain a plurality of images by using the first camera. The processor 2010 may execute an instruction stored in the memory 2020 to determine an average of light intensity values of the plurality of images. The processor 2010 may execute an instruction stored in the memory 2020 to determine the first threshold and the second threshold based on the average.

According to an embodiment of the present disclosure, the processor 2010 may execute an instruction stored in the memory 2020 to identify a frequency of ambient light. The processor 2010 may execute an instruction stored in the memory 2020 to determine the second period based on the frequency of the ambient light.

According to an embodiment of the present disclosure, the processor 2010 may execute an instruction stored in the memory 2020 to obtain a plurality of fifth temporary images by using the second camera. The processor 2010 may execute an instruction stored in the memory 2020 to determine, from among the plurality of fifth temporary images, one temporary image having a light intensity value closest to the average. The processor 2010 may execute an instruction stored in the memory 2020 to determine an image capture start time of the second camera based on an image capture time of the determined temporary image.

According to an embodiment of the present disclosure, the processor 2010 may execute an instruction stored in the memory 2020 to obtain a first temporary image captured at intervals of a third period. The processor 2010 may execute an instruction stored in the memory 2020 to obtain a second temporary image captured at intervals of a fourth period. The processor 2010 may execute an instruction stored in the memory 2020 to obtain a difference image representing a difference between the first temporary image and the second temporary image. The processor 2010 may execute an instruction stored in the memory 2020 to obtain the second image at the intervals of the second period based on a light intensity change of the difference image being greater than or equal to a threshold.

According to an embodiment of the present disclosure, the electronic device may further include a light sensor. The processor 2010 may execute an instruction stored in the memory 2020 to obtain a light intensity value of ambient light by using the light sensor. The processor 2010 may execute an instruction stored in the memory 2020 to determine the first threshold and the second threshold based on the light intensity value of the ambient light.

According to an embodiment of the present disclosure, the processor 2010 may execute an instruction stored in the memory 2020 to predict a time when the light intensity value of the first image is greater than the first threshold or less than the second threshold. The processor 2010 may execute an instruction stored in the memory 2020 to obtain only the second image during the predicted time. The processor 2010 may execute an instruction stored in the memory 2020 to obtain only the first image at a time other than the predicted time.

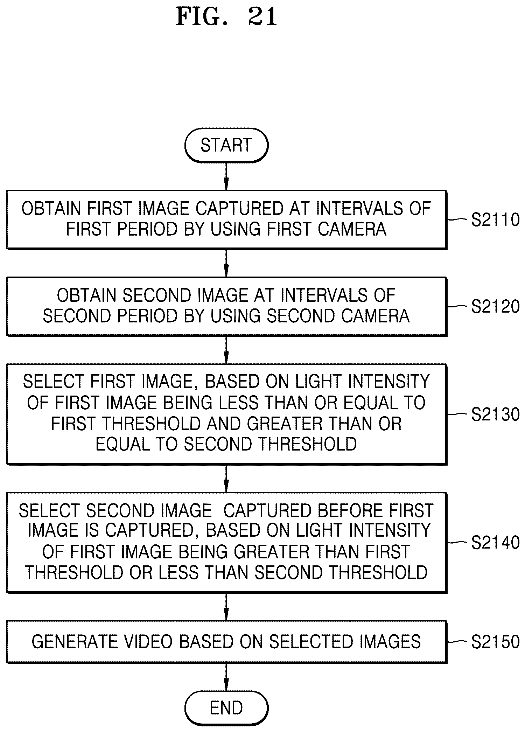

FIG. 21 is a flowchart of a method of generating a flicker-corrected video, according to an embodiment of the present disclosure.

The method of generating a flicker-compensated video, according to an embodiment of the present disclosure, may be performed by the electronic device 100. In operation S2110, the electronic device 100 may obtain a first image captured at intervals of a first period by using a first camera.

In operation S2120, the electronic device 100 may obtain a second image captured at intervals of a second period by using a second camera. According to one embodiment of the present disclosure, the first camera and the second camera may be cameras determined from among a plurality of cameras of the electronic device 100. For example, the first camera may be a main camera, and the second camera may be a telephoto camera, but is not limited thereto.

In operation S2130, the electronic device 100 may select the first image, based on a light intensity value of the first image being less than or equal to a first threshold and greater than or equal to a second threshold. In an embodiment, the first threshold is a value greater than the second threshold.

In operation S2140, the electronic device 100 may select the second image captured before the first image is captured, based on the light intensity value being greater than the first threshold or less than the second threshold.

In operation S2150, the electronic device 100 may generate a video, based on the selected first image or second image. The electronic device 100 may generate a video by using the selected first image or second image that that shows a light intensity less than or equal to the first threshold and greater than the second threshold. The generated video may exhibit no flicker or improved flicker due to a small difference in light intensity.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer in which data is temporarily stored.

According to an embodiment, methods according to various embodiments set forth herein may be included in a computer program product when provided. The computer program product may be traded, as a product, between a seller and a buyer. The computer program product may be distributed in the form of a machine-readable storage medium (e.g., compact disc ROM (CD-ROM)) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

According to an embodiment of the present disclosure, provided is an electronic device including a first camera, a second camera, a memory storing at least one instruction, and at least one processor. The at least one processor may be configured to execute the at least one instruction to obtain a first image captured at intervals of a first period by using the first camera. The at least one processor may be configured to execute the at least one instruction to obtain a second image captured at intervals of a second period by using the second camera. The at least one processor may be configured to execute the at least one instruction to select the first image, based on a light intensity value of the first image being less than or equal to a first threshold and greater than or equal to a second threshold. The at least one processor may be configured to execute the at least one instruction to select the second image captured before the first image is captured, based on the light intensity value being greater than the first threshold or less than the second threshold. The at least one processor may be configured to execute the at least one instruction to generate a video based on the selected first image or second image.

According to an embodiment of the present disclosure, the at least one processor may be configured to execute the at least one instruction to obtain a third temporary image by using the first camera. The at least one processor may be configured to execute the at least one instruction to obtain a fourth temporary image by using the second camera. The at least one processor may be configured to execute the at least one instruction to determine a reference camera among the first camera and the second camera based on light intensity distributions of the third temporary image and the fourth temporary image. The at least one processor may be configured to execute the at least one instruction to synchronize settings of the first camera or the second camera based on settings of the reference camera.

According to an embodiment of the present disclosure, the at least one processor may be configured to execute the at least one instruction to identify an overlapping region between the third temporary image and the fourth temporary image. The at least one processor may be configured to execute the at least one instruction to determine a reference camera among the first camera and the second camera based on a light intensity distribution of the overlapping region between the third temporary image and the fourth temporary image.

According to an embodiment of the present disclosure, the at least one processor may be configured to execute the at least one instruction to obtain a plurality of images by using the first camera. The at least one processor may be configured to execute the at least one instruction to determine an average of light intensity values of the plurality of images. The at least one processor may be configured to execute the at least one instruction to determine the first threshold and the second threshold based on the average.

According to an embodiment of the present disclosure, the at least one processor may be configured to execute the at least one instruction to identify a frequency of ambient light. The at least one processor may be configured to execute the at least one instruction to determine the second period based on the frequency of the ambient light.

According to an embodiment of the present disclosure, a second period $T_2$ may be determined as $T_2 = N / f_{light}$, where N is a natural number and $f_{light}$ is a frequency of a light source.

According to an embodiment of the present disclosure, the at least one processor may be configured to execute the at least one instruction to obtain a plurality of fifth temporary images by using the second camera. The at least one processor may be configured to execute the at least one instruction to determine, from among the plurality of fifth temporary images, one temporary image having a light intensity value closest to the average. The at least one processor may be configured to execute the at least one instruction to determine an image capture start time of the second camera based on an image capture time of the determined temporary image.

According to an embodiment of the present disclosure, the at least one processor may be configured to execute the at least one instruction to obtain a first temporary image captured at intervals of a third period. The at least one processor may be configured to execute the at least one instruction to obtain a second temporary image captured at intervals of a fourth period. The at least one processor may be configured to execute the at least one instruction to obtain a difference image representing a difference between the first temporary image and the second temporary image. The at least one processor may be configured to execute the at least one instruction to obtain the second image at the intervals of the second period based on a light intensity change of the difference image being greater than or equal to a threshold.

According to an embodiment of the present disclosure, the electronic device may further include a light sensor. The at least one processor may be configured to execute the at least one instruction to obtain a light intensity value of ambient light by using the light sensor. The at least one processor may be configured to execute the at least one instruction to determine the first threshold and the second threshold based on the light intensity value of the ambient light.

According to an embodiment of the present disclosure, the at least one processor may be configured to execute the at least one instruction to predict a time when the light intensity value of the first image is greater than the first threshold or less than the second threshold. The at least one processor may be configured to execute the at least one instruction to obtain only the second image during the predicted time. The at least one processor may be configured to execute the at least one instruction to obtain only the first image at a time other than the predicted time.

According to an embodiment of the present disclosure, a video generation method is provided. The video generation method may include obtaining a first image captured at intervals of a first period by using a first camera. The video generation method may include obtaining a second image captured at intervals of a second period by using a second camera. The video generation method may include selecting the first image, based on a light intensity value of the first image being less than or equal to a first threshold and greater than or equal to a second threshold. The video generation method may include selecting the second image captured before the first image is captured, based on the light intensity value being greater than the first threshold or less than the second threshold. The video generation method may include generating a video based on the selected first image or second image.

According to an embodiment of the present disclosure, the video generation method may include obtaining a third temporary image by using the first camera. The video generation method may include obtaining a fourth temporary image by using the second camera. The video generation method may include determining a reference camera among the first camera and the second camera based on light intensity distributions of the third temporary image and the fourth temporary image. The video generation method may include synchronizing settings of the first camera or the second camera based on settings of the reference camera.

According to an embodiment of the present disclosure, the video generation method may include identifying an overlapping region between the third temporary image and the fourth temporary image. The video generation method may include determining a reference camera among the first camera and the second camera based on a light intensity distribution of the overlapping region between the third temporary image and the fourth temporary image.

According to an embodiment of the present disclosure, the video generation method may include obtaining a plurality of images by using the first camera. The video generation method may include determining an average of light intensity values of the plurality of images. The video generation method may include determining the first threshold and the second threshold based on the average.

According to an embodiment of the present disclosure, the video generation method may include identifying a frequency of ambient light. The video generation method may include determining the second period based on the frequency of the ambient light.

According to an embodiment of the present disclosure, a second period T2 may be determined using T2 = N / flight, where N is a natural number and flight is a frequency of a light source.

According to an embodiment of the present disclosure, the video generation method may include obtaining a plurality of fifth temporary images by using the second camera. The video generation method may include determining, from among the plurality of fifth temporary images, one temporary image having a light intensity value closest to the average. The video generation method may include determining an image capture start time of the second camera based on an image capture time of the determined temporary image.

According to an embodiment of the present disclosure, the video generation method may include obtaining a first temporary image captured at intervals of a third period. The video generation method may include obtaining a second temporary image captured at intervals of a fourth period. The video generation method may include obtaining a difference image representing a difference between the first temporary image and the second temporary image. The video generation method may include obtaining the second image at the intervals of the second period based on a light intensity change of the difference image being greater than or equal to a threshold.

According to an embodiment of the present disclosure, the video generation method may include obtaining a light intensity value of ambient light by using a light sensor. The video generation method may include determining the first threshold and the second threshold based on the light intensity value of the ambient light.

According to an embodiment of the present disclosure, one or more computer-readable recording media having stored thereon a program for performing the method may be provided.

**Claims**

1. An electronic device (100) comprising:

   a first camera (2030);
   a second camera (2040);
   a memory (2020) storing at least one instruction; and
   at least one processor (2010),
   wherein the at least one processor (2010) is configured to execute the at least one instruction to
   obtain a first image captured at intervals of a first period by using the first camera (2030),
   obtain a second image captured at intervals of a second period by using the second camera (2040),
   select the first image, based on a light intensity value of the first image being less than or equal to a first threshold and greater than or equal to a second threshold, select the second image captured before the first image is captured, based on the light intensity value being greater than the first threshold or less than the second threshold, and
   generate a video, based on the selected first image or second image.

2. The electronic device of claim 1, wherein

   the at least one processor (2010) is further configured to execute the at least one instruction to
   obtain a first temporary image captured at intervals of a third period,
   obtain a second temporary image captured at intervals of a fourth period,
   obtain a difference image representing a difference between the first temporary image and the second temporary image, and
   obtain the second image at the intervals of the second period, based on a light intensity change of the difference image being greater than or equal to a threshold.

3. The electronic device of claim 1 or 2, wherein

   the at least one processor (2010) is further configured to execute the at least one instruction to
   obtain a third temporary image by using the first camera (2030),
   obtain a fourth temporary image by using the second camera (2040),
   determine a reference camera among the first camera and the second camera, based on light intensity distributions of the third temporary image and the fourth temporary image, and
   synchronize settings of the first camera or the second camera, based on settings of the reference camera.

4. The electronic device of claim 3, wherein

   the at least one processor (2010) is further configured to execute the at least one instruction to
   identify an overlapping region between the third temporary image and the fourth temporary image, and
   determine the reference camera among the first camera and the second camera, based on a light intensity distribution of the overlapping region between the third temporary image and the fourth temporary image.

5. The electronic device of any one of claims 1 to 4, wherein

   the at least one processor (2010) is further configured to execute the at least one instruction to
   obtain a plurality of images by using the first camera (2030),
   determine an average of light intensity values of the plurality of images, and
   determine the first threshold and the second threshold, based on the average.

6. The electronic device of any one of claims 1 to 5, wherein

   the at least one processor (2010) is further configured to execute the at least one instruction to
   identify a frequency of ambient light, and
   determine the second period, based on the frequency of the ambient light.

7. The electronic device of claim 6, wherein a second period $T_2$ is determined as $T_2 = N / f_{light}$ (where N is a natural number and $f_{light}$ is a frequency of a light source).

8. The electronic device of claim 5, wherein

the at least one processor (2010) is further configured to execute the at least one instruction to
obtain a plurality of fifth temporary images by using the second camera (2040),
determine, from among the plurality of fifth temporary images, one temporary image having a light intensity value closest to the average, and
determine an image capture start time of the second camera, based on an image capture time of the determined temporary image.

9. The electronic device of any one of claims 1 to 8, further comprising

a light sensor,
wherein the at least one processor (2010) is further configured to execute the at least one instruction to
obtain a light intensity value of ambient light by using the light sensor, and
determine the first threshold and the second threshold, based on the light intensity value of the ambient light.

10. The electronic device of any one of claims 1 to 9, wherein

the at least one processor (2010) is further configured to execute the at least one instruction to
predict a time when the light intensity value of the first image is greater than the first threshold or less than the second threshold,
obtain only the second image during the predicted time, and
obtain only the first image at a time other than the predicted time.

11. A video generation method comprising:

obtaining a first image captured at intervals of a first period by using a first camera;
obtaining a second image captured at intervals of a second period by using a second camera;
selecting the first image, based on a light intensity value of the first image being less than or equal to a first threshold and greater than or equal to a second threshold;
selecting the second image captured before the first image is captured, based on the light intensity value being greater than the first threshold or less than the second threshold; and
generating a video, based on the selected first image or second image.

12. The video generation method of claim 11, further comprising:

obtaining a first temporary image captured at intervals of a third period;
obtaining a second temporary image captured at intervals of a fourth period;
obtaining a difference image representing a difference between the first temporary image and the second temporary image; and
obtaining the second image at the intervals of the second period, based on a light intensity change of the difference image being greater than or equal to a threshold.

13. The video generation method of claim 11 or 12, further comprising:

obtaining a third temporary image by using the first camera;
obtaining a fourth temporary image by using the second camera;
determining a reference camera among the first camera and the second camera, based on light intensity distributions of the third temporary image and the fourth temporary image; and
synchronizing settings of the first camera or the second camera, based on settings of the reference camera.

14. The video generation method of claim 13, comprising:

identifying an overlapping region between the third temporary image and the fourth temporary image; and
determining the reference camera among the first camera and the second camera, based on a light intensity distribution of the overlapping region between the third temporary image and the fourth temporary image.

15. A computer-readable recording medium having stored thereon a program for performing the video generation method of any one of claims 11 to 14 on a computer.

## FIG. 1

Light lines

Dark lines

Light lines

Dark lines

Light lines

Dark lines

2023

EP 4 651 509 A1

FIG. 2A

Light intensity
modulation

Light intensity
Lux

Light intensity / captured frame

Light intensity of frames
NOT similar → Flicker

Frame with low light intensity    Frame with high light intensity

# FIG. 2B

Light intensity
Lux

Light intensity of frames are similar → No Flicker

Frames with similar light intensity

# FIG. 3

EP 4 651 509 A1

# FIG. 4

```
                    ┌─────────┐
                    │  START  │
                    └─────────┘
                         │
                         ▼
NO          ◇ IS FLICKER DETECTED? ◇ ─── S410
 │                       │
 │                      YES
 │                       ▼
 │    ┌──────────────────────────────────┐
 │    │  SYNCHRONIZE CAMERA PARAMETERS   │── S420
 │    └──────────────────────────────────┘
 │                       │
 │                       ▼
 │    ┌──────────────────────────────────┐
 │    │       CAMERA 1 SETTINGS          │── S430
 │    └──────────────────────────────────┘
 │                       │
 │                       ▼
 │    ┌──────────────────────────────────┐
 │    │       CAMERA 2 SETTINGS          │── S440
 │    └──────────────────────────────────┘
 │                       │
 │                       ▼
 │    ┌──────────────────────────────────┐
 │    │         CAPTURE IMAGES           │── S450
 │    └──────────────────────────────────┘
 │                       │
 │                       ▼
 │    ┌──────────────────────────────────┐
 │──▶ │  DETERMINE WHETHER TO            │── S460
 │    │  REPLACE FIRST IMAGE            │
 │    └──────────────────────────────────┘
 │                       │
 │                       ▼
 │    ┌──────────────────────────────────┐
 │    │  DISPLAY FIRST IMAGE OR          │── S470
 │    │  REPLACED IMAGE                 │
 │    └──────────────────────────────────┘
 │                       │
 │                       ▼
NO          ◇ IDENTIFY WHETHER         ◇ ── S480
 │            IMAGE CAPTURING
 │            HAS ENDED
 │                       │
 │                      YES
 └──────────────────────▶│
                         ▼
                    ┌─────────┐
                    │   END   │
                    └─────────┘
```

# FIG. 5

START

CAPTURE IMAGE AT PERIOD OF N/100 SECS — S510

CAPTURE IMAGE AT PERIOD OF M/120 SECS — S520

GENERATE DIFFERENCE IMAGE — S530

S540
IS THERE CHANGE IN LUMINANCE VALUE?

YES

NO — S550

NO FLICKER IS PRESENT

S560
FLICKER IS PRESENT

END

# FIG. 6

No Flicker ⟋610

N/100 sec

—

⟋620

M/120 sec

=

⟋630

Difference image:
No flicker detected

Flicker ⟋640

N/100 sec

—

⟋650

M/120 sec

=

⟋660

Difference image:
Flicker detected

# FIG. 7

```
                    ┌─────────┐
                    │  START  │
                    └─────────┘
                         │
                         ▼
   ┌──────────────────────────────────────────┐
   │   CAPTURE IMAGE BY USING FIRST CAMERA     │── S710
   └──────────────────────────────────────────┘
                         │
                         ▼
   ┌──────────────────────────────────────────┐
   │  CAPTURE IMAGE BY USING SECOND CAMERA     │── S720
   └──────────────────────────────────────────┘
                         │
                         ▼
   ┌──────────────────────────────────────────┐
   │         ANALYZE OVERLAPPING REGION        │── S730
   └──────────────────────────────────────────┘
                         │
                         ▼
   ┌──────────────────────────────────────────┐
   │            SET REFERENCE CAMERA           │── S740
   └──────────────────────────────────────────┘
                         │
                         ▼
   ┌──────────────────────────────────────────┐
   │          SYNCHRONIZE PARAMETERS           │── S750
   └──────────────────────────────────────────┘
                         │
                         ▼
                    ┌─────────┐
                    │   END   │
                    └─────────┘
```

# FIG. 8

Camera 1     810

A2

A1

α2 α1 H

Camera 2     820

B2

B1

β2 β1 H

Camera 1 + Camera 2

# FIG. 9

START

CAPTURE IMAGES BY USING
FIRST CAMERA — S910

OBTAIN LIGHT INTENSITIES OF
CAPTURED IMAGES — S920

HAS DEFINED
IMAGE CAPTURE TIME
ELAPSED? — S930

NO

YES

OBTAIN AVERAGE LIGHT INTENSITY
OF CAPTURED IMAGES — S940

END

FIG. 10

# FIG. 11

```
                    ( START )
                        │
                        ▼
    ┌───────────────────────────────────────┐
    │   DETERMINE IMAGE CAPTURE PERIOD OF    │─── S1110
    │            SECOND CAMERA               │
    └───────────────────────────────────────┘
                        │
                        ▼
    ┌───────────────────────────────────────┐
    │  CAPTURE IMAGES BY USING SECOND CAMERA │─── S1120
    └───────────────────────────────────────┘
                        │
                        ▼
    ┌───────────────────────────────────────┐
    │    OBTAIN LIGHT INTENSITY VALUES OF    │─── S1130
    │           CAPTURED IMAGES              │
    └───────────────────────────────────────┘
                        │
                        ▼
    ┌───────────────────────────────────────┐
    │  COMPARE WITH AVERAGE LIGHT INTENSITY  │─── S1140
    │        VALUE OF FIRST CAMERA           │
    └───────────────────────────────────────┘
                        │
                        ▼
    ┌───────────────────────────────────────┐
    │  DETERMINE IMAGE WITH SMALL DIFFERENCE │
    │   FROM AVERAGE LIGHT INTENSITY VALUE   │─── S1150
    │            FOR FIRST CAMERA            │
    └───────────────────────────────────────┘
                        │
                        ▼
    ┌───────────────────────────────────────┐
    │   DETERMINE IMAGE CAPTURE START TIME   │─── S1160
    │           OF SECOND CAMERA             │
    └───────────────────────────────────────┘
                        │
                        ▼
                     ( END )
```

EP 4 651 509 A1

# FIG. 12A

FIG. 12B

EP 4 651 509 A1

## FIG. 13

# FIG. 14

```
                        ┌─────────┐
                        │  START  │
                        └────┬────┘
                             │
                             ▼
                         ╱       ╲
            NO        ╱  IS LIGHT   ╲
      ◄─────────────╱  INTENSITY     ╲ ─── S1410
                   ╲ VALUE OF FIRST   ╱
                    ╲ IMAGE WITHIN   ╱
                     ╲DEFINED RANGE ╱
                        ╲       ╱
                             │ YES
                             ▼
      │          ┌──────────────────────────────┐
      │          │ DETERMINE, AS REPLACEMENT     │
      │          │ IMAGE, SECOND IMAGE CAPTURED  │ ─── S1420
      │          │ BEFORE FIRST IMAGE            │
      │          └───────────────┬──────────────┘
      │                          │
      │                          ▼
      │          ┌──────────────────────────────┐
      └─────────►│   DISPLAY PREVIEW IMAGE       │ ─── S1430
                 └───────────────┬──────────────┘
                                 │
                                 ▼
                            ┌─────────┐
                            │   END   │
                            └─────────┘
```

# FIG. 15

EP 4 651 509 A1

# FIG. 16

```
                    ┌─────────┐
                    │  START  │
                    └────┬────┘
                         ▼
  ┌──────────────────────────────────────────┐
  │   OBTAIN AVERAGE LIGHT INTENSITY VALUE    │──S1610
  └──────────────────┬───────────────────────┘
                     ▼
  ┌──────────────────────────────────────────┐
  │       OBTAIN LIGHT INTENSITY VALUES       │──S1620
  │            VIA LIGHT SENSOR               │
  └──────────────────┬───────────────────────┘
                     ▼
                ╱◇◇◇◇◇◇◇◇◇◇◇◇╲
          NO   ╱   IS CHANGE IN   ╲
  ◄──────────◇  LIGHT INTENSITY VALUES ◇──S1630
             ◇ OBTAINED VIA LIGHT SENSOR CHANGE ◇
              ╲   IN CERTAIN RANGE OR   ╱
               ╲      GREATER         ╱
                ╲◇◇◇◇◇◇◇◇◇◇◇◇╱
                     │ YES
                     ▼
  ┌──────────────────────────────────────────┐
  │            MODIFY CONDITION FOR           │──S1640
  │            LIGHT INTENSITY VALUE          │
  └──────────────────┬───────────────────────┘
                     ▼
               ┌─────────┐
               │   END   │
               └─────────┘
```

# FIG. 17

FIG. 18

# FIG. 19

② User select video record mode

Flicker in preview screen before recording

③ Start recording

End recording

User

④ End recording

Video save

⑤ User replay

Video ▷

No flicker in Play back video

00:14/00:24

EP 4 651 509 A1

FIG. 20

# FIG. 21

```
                          ( START )
                              │
                              ▼
  ┌─────────────────────────────────────────────────┐
  │ OBTAIN FIRST IMAGE CAPTURED AT INTERVALS OF      │── S2110
  │ FIRST PERIOD BY USING FIRST CAMERA               │
  └─────────────────────────────────────────────────┘
                              │
                              ▼
  ┌─────────────────────────────────────────────────┐
  │ OBTAIN SECOND IMAGE AT INTERVALS OF              │── S2120
  │ SECOND PERIOD BY USING SECOND CAMERA             │
  └─────────────────────────────────────────────────┘
                              │
                              ▼
  ┌─────────────────────────────────────────────────┐
  │ SELECT FIRST IMAGE, BASED ON LIGHT INTENSITY     │
  │ OF FIRST IMAGE BEING LESS THAN OR EQUAL TO       │── S2130
  │ FIRST THRESHOLD AND GREATER THAN OR              │
  │ EQUAL TO SECOND THRESHOLD                        │
  └─────────────────────────────────────────────────┘
                              │
                              ▼
  ┌─────────────────────────────────────────────────┐
  │ SELECT SECOND IMAGE  CAPTURED BEFORE FIRST       │
  │ IMAGE IS CAPTURED, BASED ON LIGHT INTENSITY      │── S2140
  │ OF FIRST IMAGE BEING GREATER THAN FIRST          │
  │ THRESHOLD OR LESS THAN SECOND THRESHOLD          │
  └─────────────────────────────────────────────────┘
                              │
                              ▼
  ┌─────────────────────────────────────────────────┐
  │ GENERATE VIDEO BASED ON SELECTED IMAGES          │── S2150
  └─────────────────────────────────────────────────┘
                              │
                              ▼
                          (  END  )
```

# EP 4 651 509 A1

## INTERNATIONAL SEARCH REPORT

| International application No. |
| --- |
| **PCT/KR2023/017764** |

| A. | CLASSIFICATION OF SUBJECT MATTER |
| --- | --- |
| | **H04N 23/951**(2023.01)i; **H04N 23/71**(2023.01)i; **H04N 23/81**(2023.01)i; **H04N 5/06**(2006.01)i |

According to International Patent Classification (IPC) or to both national classification and IPC

| B. | FIELDS SEARCHED |
| --- | --- |

Minimum documentation searched (classification system followed by classification symbols)

H04N 23/951(2023.01); H04N 21/235(2011.01); H04N 5/225(2006.01); H04N 5/232(2006.01); H04N 5/235(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플리커(flicker), 카메라(camera), 주기(period), 임계 값(threshold), 밝기 값 (brightness)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2007-028441 A (OKI ELECTRIC INDUSTRY CO., LTD.) 01 February 2007 (2007-02-01) See claim 1. | 1,6-7,9,11,15 |
| A | | 2-5,8,10,12-14 |
| Y | JP 2021-190992 A (CANON INC.) 13 December 2021 (2021-12-13) See paragraphs [0033] and [0036]; claims 1-4; and figures 5 and 7. | 1,6-7,9,11,15 |
| Y | JP 7110406 B2 (FUJIFILM CORP.) 01 August 2022 (2022-08-01) See paragraph [0062]; and figure 4. | 7 |
| A | KR 10-2022-0126084 A (SAMSUNG ELECTRONICS CO., LTD.) 15 September 2022 (2022-09-15) See paragraphs [0007]-[0009]; and claims 1-8. | 1-15 |
| A | JP 2020-068394 A (CANON INC.) 30 April 2020 (2020-04-30) See paragraph [0014]; and claims 1-4. | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 February 2024** | **08 February 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | | | International application No. |
|---|---|---|---|---|
| Information on patent family members | | | | **PCT/KR2023/017764** |

| Patent document cited in search report | | | Publication date (day/month/year) | Patent family member(s) | | | Publication date (day/month/year) |
|---|---|---|---|---|---|---|---|
| JP | 2007-028441 | A | 01 February 2007 | None | | | |
| JP | 2021-190992 | A | 13 December 2021 | CN | 113747005 | A | 03 December 2021 |
| | | | | DE | 102021113677 | A1 | 02 December 2021 |
| | | | | GB | 2599764 | A | 13 April 2022 |
| | | | | US | 11516408 | B2 | 29 November 2022 |
| | | | | US | 2021-0377436 | A1 | 02 December 2021 |
| JP | 7110406 | B2 | 01 August 2022 | WO | 2020-158069 | A1 | 06 August 2020 |
| KR | 10-2022-0126084 | A | 15 September 2022 | WO | 2022-191585 | A1 | 15 September 2022 |
| JP | 2020-068394 | A | 30 April 2020 | None | | | |

Form PCT/ISA/210 (patent family annex) (July 2022)